Europäisches Patentamt

**European Patent Office**

**Office européen des brevets**

(11) Numéro de publication: **0 013 319**
**B1**

(12)

# FASCICULE DE BREVET EUROPEEN

(45) Date de publication du fascicule du brevet: **15.09.82**

(51) Int. Cl.³: **G 02 B 5/14**

(21) Numéro de dépôt: **79104594.1**

(22) Date de dépôt: **19.11.79**

(54) Coupleur optique pour connecter une source lumineuse avec au moins une ligne de transmission optique de section faible par rapport à l'ouverture du faisceau lumineux issu de ladite source.

(30) Priorité: **28.12.78 US 973939**

(43) Date de publication de la demande:
**23.07.80 Bulletin 80/15**

(45) Mention de la délivrance du brevet:
**15.09.82 Bulletin 82/37**

(84) Etats contractants désignés:
**DE FR GB**

(56) Documents cités:
**DE - A - 2 510 043**
**FR - A - 2 260 120**
**FR - A - 2 365 750**

(73) Titulaire: **International Business Machines
Corporation
Armonk, N.Y. 10504 (US)**

(72) Inventeur: **Balliet, Layton
1134 SW 19th Street
Boca Raton, Florida 33432 (US)**

(74) Mandataire: **Bonin, Jean-Jacques
COMPAGNIE IBM FRANCE Département de
Propriété Industrielle
F-06610 La Gaude (FR)**

Coupleur optique pour connecter une source lumineuse avec au moins une ligne de transmission optique de section faible par rapport à l'ouverture du faisceau lumineux issu de ladite source

Domaine Technique

La présente invention concerne les dispositifs optiques permettant de connecter une source lumineuse à une ligne de transmission optique, et, plus particulièrement, un dispositif optique permettant d'établir une connexion entre une source lumineuse engendrant un faisceau conique relativement ouvert et une fibre optique.

Etat de la Technique Antérieure

L'emploi de lignes de transmission optique aux fins de la transmission d'informations est de plus en plus répandue, en raison principalement de la mise au point de petites lignes de transmission optique particulièrement efficaces dont un type est connu sous l'appellation de fibre optique. Ces fibres comprennent généralement un noyau transparent entouré d'un matériau également transparent présentant un indice de réfraction inférieur à celui du noyau. Ce dernier possède en général un faible diamètre, de l'ordre de 100 microns.

L'utilisation de fibres optiques à faibles pertes pour les besoins de communications à longue distance, avec un débit de données élevé, présente un grand intérêt. En raison de leur faibles dimensions, ces fibres sont peu coûteuses à fabriquer, et il est possible d'en loger un grand nombre dans un câble de plus faible diamètre que celui d'autres types de lignes de transmission de données. Toutefois, le faible diamètre du noyau rend difficile l'introduction de lumière dans la fibre optique. Ce problème se pose avec plus d'acuité encore lorsqu'on utilise une source lumineuse qui engendre un faisceau conique relativement ouvert, dit de Lambert, le diamètre d'une section du cône augmentant rapidement au fur et à mesure que l'on s'éloigne de la source de lumière (une source lumineuse de ce type étant dite "source à faisceau ouvert"). Une telle source peut être constituée, par exemple, par une diode électroluminescente. L'une des caractéristiques de la fibre optique est que la lumière qui la frappe sous un angle supérieur à un angle prédéterminé ne peut pas pénétrer dans son noyau. La nécessité de focaliser la lumière émanant d'une source à faisceau ouvert, d'aligner la lumière ainsi focalisée sur le noyau de la fibre optique et de faire en sorte que la lumière frappe le noyau sous ledit angle prédéterminé, rend difficile et coûteuse l'obtention d'un couplage optique efficace entre de telles sources et des fibres optiques.

Les diodes électroluminescentes sont des sources à faisceau ouvert peu onéreuses qui sont fréquemment employées avec des lignes de transmission optique. En tant que sources lumineuses, ces diodes sont préférables aux lasers semi-conducteurs lorsque le fiabilité et l'obtention d'un faible prix de revient constituent des critères importants. Bien que le diamètre de la zone d'émission lumineuse d'une telle diode soit de l'ordre de 25 à 50 microns, le faisceau engendré est généralement ouvert (faisceau de Lambert). Cette caractéristique des diodes électroluminescentes a pour effet de faire obstacle à tout couplage optique efficace avec des fibres optiques.

Un procédé connu qui est employé pour obtenir un couplage optique entre une diode électroluminescente et une fibre optique simplement à abouter la diode et l'extrémité du noyau de la fibre. Il est cependant difficile d'obtenir un alignement correct lorsque le faisceau lumineux engendré par la diode est étroit. Lorsque le faisceau est large ou lorsque l'angle prédéterminé sous lequel la lumière peut être introduite dans le noyau est de faible valeur, ce type de couplage est inefficace.

Des lentilles et des réflecteurs ont été utilisés pour focaliser et collimater la lumière engendrée par une source à faisceau ouvert de manière à obtenir un couplage satisfaisant entre celle-ci et une fibre optique. Par exemple, dans le dispositif de couplage décrit dans la demande de brevet français publiée sous le No. 2 365 750, la lumière issue d'une source lumineuse (diode laser) et destinée à être transmise à une fibre optique est collimatée à l'aide d'une seconde fibre optique identique à la première disposée transversalement entre la source et la fibre de transmission. Dans ce dispositif, l'alignement précis exigé entre la source et la fibre de transmission est obtenu à l'aide d'un système de cales complexe nécessitant des organes de grande précision. De plus, une telle disposition permet difficilement de coupler sans de substantielles pertes d'énergie un faisceau très ouvert avec une fibre optique de très faible section.

De même dans le dispositif décrit dans la demande de brevet français publiée sous le No. 2 260 120, la lumière issue d'une diode électroluminescente est transmise à un faisceau de guides d'onde dont l'axe est aligné avec la diode, par l'intermédiaire d'une perle sphérique transparente faisant office de moyen de collimation. La diode, la perle et le faisceau sont chacun montés dans un support particulier et ces divers supports sont ensuite assemblés entre eux. On voit immédiatement que dans un tel dispositif, l'alignement précis des trois éléments qui le composent ne peut s'obtenir qu'au prix d'une grande précision de fabrication et de montage de ces éléments et/ou de leurs supports.

On a également employé des lentilles présentant un indice variable de réfraction pour diriger la lumière vers le noyau d'une fibre optique. Le prix élevé d'une telle lentille constitue le principal inconvénient de ce type de couplage optique.

La demande de brevet allemand 25 10 043 décrit une lentille semi-cylindrique obtenue en coupant axialement une portion de fibre optique. Cette dernière est du type comportant un noyau et une enveloppe, et on obtient ainsi une lentille comportant deux parties d'indices de réfraction différents. Cette demande évoque la possibilité d'utiliser une telle lentille pour assurer le couplage optique à faibles pertes des guides d'ondes lumineuses, mais ne décrit aucun montage permettant de coupler une source lumineuse à faisceau ouvert avec une fibre optique de section faible.

La présente invention permet de réaliser un dispositif de couplage optique, plus simple, plus facile à monter, et moins onéreux que les dispositifs de couplage connus, pour coupler une source lumineuse à une ligne de transmission optique et, plus particulièrement, une diode électroluminescente à faisceau très ouvert avec und fibre optique de faible section.

Exposé de l'invention

La présente invention concerne un coupleur optique pour connecter une source lumineuse avec, au moins, une ligne de transmission optique de section faible par rapport à l'ouverture du faisceau lumineux issu de ladite source, du genre comprenant: des moyens de focalisation et de collimation transparents interposés entre la source lumineuse et l'extrémité de la ligne, comprenant au moins un premier élément présentant un premier indice de réfraction, formant un premier volume de révolution de même axe que l'extrémité de ladite ligne, et comportant une première et une seconde surfaces convexes de révolution axialement opposées, des moyens de support pour monter ladite source lumineuse au voisinage d'une première face desdits moyens de focalisation et de collimation, et des moyens pour monter l'extrémité de ladite ligne optique au voisinage d'une seconde face opposée à ladite premier face desdites moyens de focalisation, caractérisé en ce que:

lesdits moyens de focalisation et de collimation comportent en outre: un deuxième élément présentant un deuxième indice de réfraction inférieur à celui dudit premier élément, formant un second volume de révolution ayant une surface convexe et une surface concave toutes deux de révolution, la forme et la dimension de ladite surface concave étant telles que cette dernière s'emboîte exactement et coaxialement sur ladite première surface convexe dudit premier élément, et un troisième élément présentant un troisième indice de réfraction inférieur à celui dudit premier élément, formant un troisième volume de révolution ayant une surface concave et une seconde surface, toutes deux de révolution, la forme et la dimension de ladite surface concave étant telle que cette dernière s'emboîte exactement et coaxialement sur ladite second surface convexe dudit premier élément, ladite source étant montée sur lesdits moyens de support au voisinage de la surface convexe dudit second élément et sur ledit axe, de façon que la lumière issue de ladite source traverse successivement lesdits deuxième, premier. et troisième éléments en formant à l'intérieur desdits éléments un faisceau lumineux de même axe que celui de ces derniers, et lesdits moyens pour monter l'extrémité de ladite ligne optique ètant disposés dans ladite second surface dudit troisième élément, de façon que l'extrémité de ladite ligne soit en contact avec cette surface et que son axe coïncide avec l'axe desdits trois éléments, et reçoive le faisceau lumineux issu dudit troisième élément.

Dans une réalisation particulière de la présente invention, le dispositif est constitué essentiellement d'une lentille sphérique composite transparente à la luminère et comprenant un élement sphérique intérieur ou noyau présentant un premier indice de réfraction, ainsi qu'une enveloppe sphérique entourant ledit noyau et présentant un second indice de réfraction qui est inférieur au premier. La source lumineuse est montée à proximité immédiate de l'un des côtés de la lentille sphérique de telle sorte que les rayons lumineux frappent cette dernière, et la ligne de transmission optique est couplée optiquement au côté diamétralement opposé de la lentille. Dans cet agencement, la lumière émanant de ladite source est réfractée vers un point focal lorsqu' elle pénètre dans l'enveloppe sphérique et passe de cette dernière au noyau. La lumière est ensuite transmise du noyau à la partie diamétralement opposée de l'enveloppe sphérique et pénètre dans la ligne de transmission optique.

Dans une réalisation particulière de l'invention, un cylindre dont le diamètre est inférieur à celui de la lentille sphérique permet de monter la source à faisceau ouvert à proximité immédiate de cette lentille. Ladite source est montée à proximité du centre de l'une des extrémités du cylindre, et la lentille sphérique est montée à l'extrémité opposée du cylindre à une distance prédéterminée de la source lumineuse et selon une orientation telle qu'une quantité maximum de lumière puisse pénétrer dans la ligne de transmission optique.

Dans une autre réalisation de l'invention, la source à faisceau ouvert est montée sur un substrat dans lequel une rainure est pratiquée à proximité immédiate de ladite source. La lentille sphérique est ensuite fixée dans cette rainure à une distance prédéterminée de la source lumineuse selon une orientation qui permet d'obtenir le couplage optique le plus efficace entre ladite source et la ligne de transmission optique.

D'autres, objets, caractéristiques et avantages de le présente invention ressortiront mieux de l'exposé qui suit, fait en référence aux dessins annexés à ce texte, qui représentent un mode de réalisation préféré de celle-ci.

Brève description des figures

La Figure 1 est une vue en perspective d'une structure sphérique faisant fonction de dispositif de couplage optique entre une source lumineuse et une fibre óptique.

La Figure 2 est une coupe de la structure sphérique montée à l'une des extrémités d'un cylindre.

La Figure 3 est une coupe de la structure optique montée dans une rainure décapée dans un substrat à proximité immédiate de la source lumineuse.

Description de l'invention

Sur les différentes figures, les éléments identiques sont désignés par les mêmes numéros de référence.

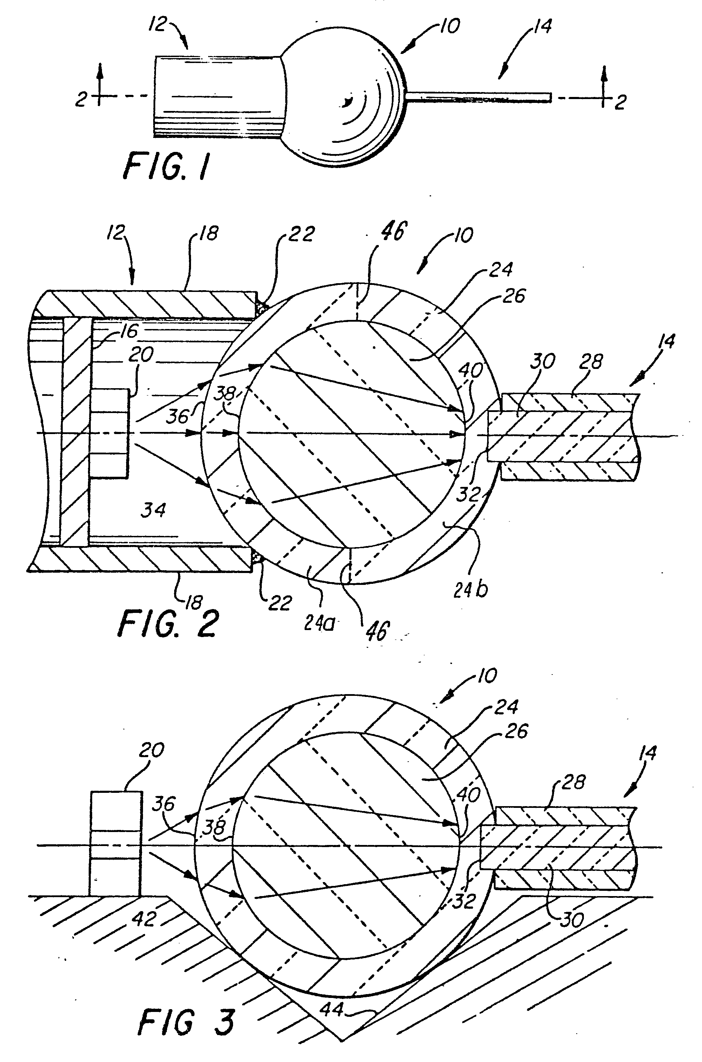

On a représenté sur la Figure 1 une structure sphérique 10 permettant d'établir un couplage optique entre une source à faisceau ouvert 12 et une fibre optique 14. La source 12 et la fibre 14 sont connectées physiquement et optiquement à la structure 10. Ainsi qu'on le verra plus loin, cette dernière fait fonction de lentille et permet de focaliser la lumière émanant de la source 12 sur l'axe de la fibre optique 14.

On a représenté sur la Figure 2 une coupe de la structure sphérique 10, de la source lumineuse 12 et de la fibre optique 14, prise suivant la ligne 2—2 de la Figure 1. La source lumineuse 12 est montée dans un cylindre 18 dont l'une des extrémités est fermée par une surface de montage 16. Une diode électroluminescente 20 est disposée au centre de la surface 16. La structure sphérique 10 est montée sur l'extrémité opposée du cylindre 18 de manière à abouter celui-ci, et un adhésif approprié 22 est employé pour fixer la structure 10 dans la position qu'elle occupe sur la Figure 2.

La structure 10 comprend une enveloppe sphérique 24 et un élément sphérique intérieur ou noyau 26. L'enveloppe 24 se compose d'un mtériau transparent présentant un indice de réfraction $n_1$, et le noyau 26 se compose d'un matériau transparent présentant un indice de réfraction $n_2$. Ces matériaux sont choisis de telle sorte que $n_2$ soit supérieur à $n_1$, le noyau 26 se composant d'un matériau transparent solide ou liquide tel que du verre optique, un matériau plastique optique ou un fluide transparent présentant un indice de réfraction convenable.

La fibre optique 14 est d'un type classique présentant de faibles pertes, et comprend un revêtement 28 entourant un noyau 30. Ce dernier est transparent et présente un indice de réfraction supérieur à celui du revêtement 28. La lumière qui doit être transmise par la fibre optique 14 doit être introduite dans celle-ci par l'extrémité 32 de son noyau 30.

La diode électroluminescente 20 est une source à faisceau ouvert. En effet, bien que la zone émettrice de la diode 20 ait un diamètre de l'ordre de 25 à 50 microns, la section du faisceau lumineux qui frappe la structure sphérique 10 est importante par rapport à celle du noyau 30 de la fibre 14. La lumière émanant de la diode 20 est transmise à la structure sphérique 10 par l'intermédiaire d'un milieu 34 présentant un indice de réfraction $n_0$ inférieur à celui, $n_2$, de l'enveloppe sphérique 24.

Sur la Figure 2, les flèches représentent des rayons lumineux typiques émanant de la diode 20. Lorsque ces rayons pénètrent dans l'enveloppe sphérique 24 après avoir traversé sa surface convexe 36, ils sont réfractés vers un point focal, comme c'est le cas avec toute surface de lentille convexe. Lorsque les rayons lumineux pénètrent dans le noyau sphérique 26 après avoir traversé la surface convexe 38 faisant fonction d'interface, l'indice de réfraction du noyau étant supérieur à celui de l'enveloppe 24, ils sont réfractés, comme cela se produit normalement avec toute surface de lentille convexe. Les indices de réfraction $n_1$ et $n_2$ ainsi que les dimensions de l'enveloppe 24 et du noyau 26 sont choisis de telle sorte que la lumière émanant de la diode 20 soit focalisée par les surfaces 36 et 38 vers l'extrémité 32 du noyau de la fibre optique. La Lumière ainsi focalisée traverse ensuite une surface 40 servant d'interface entre le noyau 26 et l'enveloppe 24, à l'extrémité diamétralement opposée du noyau par rapport à l'interface 38. Les courbures des interfaces 38 et 40 sont opposées l'une par rapport à l'autre. La lumière traverse ensuite l'enveloppe 24 et pénètre dans le noyau 30 de la fibre optique.

Une caractéristique importante de la présente invention réside dans la facilité avec laquelle la structure sphérique 10 permet d'établir un couplage optique entre la fibre 14 et la source lumineuse 12. Dans la réalisation préférée de l'invention, l'enveloppe 24 comporte un évidement qui épouse la forme de l'extrémité 32 du noyau de la fibre optique. On peut donner à l'extrémité 32 une configuration telle qu'elle permette à une quantité optimum de lumière de pénétrer dans le noyau 30. De la sorte, un couplage optique efficace est obtenu entre la structure sphérique 10 et la fibre optique 14. Un adhésif peut être employé pour fixer le revêtement 28 de la fibre optique à l'enveloppe 24. Il est toutefois sous-entendu que d'autres procédés classiques peuvent être employés pour connecter optiquement la fibre optique 14 à la structure 10. En fixant en premier lieu la fibre optique 14 à l'enveloppe 24, on facilite l'obtention d'un alignement correct de la structure sphérique et de la fibre optique 14 avec la diode électroluminescente 20, ainsi qu'il est expliqué ci-après.

Une fois que la fibre optique 14 a été connectée à la structure sphérique 10, on applique l'enveloppe sphérique 24 contre l'extrémité du cylindre 18. Le diamètre intérieur de ce dernier doit être inférieur à celui de la structure 10 afin que le cylindre affleure l'enveloppe 24. La structure 10 est ensuite ajustée sur le cylindre 18 de telle sorte qu'elle occupe une position permettant à une quantité maximum de lumière de pénétrer dans la fibre optique 14. Cela fait, un adhésif approprié 22 tel qu'une résine époxyde peut être employé pour fixer l'enveloppe 24 au cylindre 18.

La longueur et le diamètre du cylindre 18 ainsi que le diamètre de l'enveloppe sphérique 24 sont des facteurs qui permettant de déterminer la distance séparant la diode 20 de la surface extérieure 36 de l'enveloppe 24. Ces facteurs sont choisis ou prédéterminés de telle sorte qu'une quantité de lumière maximum puisse pénétrer dans la fibre optique 14.

Une autre technique de montage de la structure sphérique 10 est représentée sur la Figure 3. Dans cette dernière réalisation, la diode 20 est montée sur le substrat 42 et une rainure 44 est découpée dans le substrat à une distance choisie de la diode. Comme précédemment, la fibre optique 14 est d'abord connectée à la structure sphérique 10, que l'on déplace ensuite dans la rainure jusqu'à ce qu'elle se trouve directement en face de la diode 20. On la fait ensuite tourner sur place dans la rainure 44 jusqu'à ce qu'elle se trouve dans une orientation telle qu'une quantité maximum de lumière pénètre dans la fibre optique 14. On fixe ensuite l'enveloppe sphérique 24 dans la rainure 44 au moyen d'un adhésif ou en utilisant toute autre technique appropriée.

Le fait que le noyau 26 puisse être constitué par un matériau liquide constitue une caractéristique importante de la présente invention. Des liquides transparents présentant des indices de réfraction variables tel que l'iodure de méthylène, sont commercialisés par la firme R. P. Cargille Laboratories, Inc., Cedar Grove, New Jersey, E.U.A.. L'emploi d'un liquide transparent permet de mettre en oeuvre la présente invention d'une façon relativement peu onéreuse. Le noyau 26 peut également être constitué par divers matériaux solides présentant un indice de réfraction suffisamment élevé, mais ces derniers sont généralement plus onéreux que des matériaux liquides.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juges utiles, sans pour aurant sortir du cadre de ladite invention.

En particulier, les modes de réalisation représentés aux figures 1, 2 et 3 comportent un noyau central et une enveloppe sphériques, mais d'autres configurations géométriques peuvent également être utilisées. Il est cependant nécessaire dans tous les cas de figure que le noyau 26 et l'enveloppe 24 constituent des volumes possédant un axe de révolution qui, une fois le montage réalisé, est confondu avec l'axe de la fibre optique 14 et de la source de lumière 12.

De même, il n'est pas nécessaire que l'enveloppe 24 soit realisée en une seule pièce: elle pourrait par exemple être constituée de deux calottes hémisphériques complémentaires 24a et 24b raccordées comme représenté par les traits pointillés forts 46 sur la figure 2 ou de toute autre forme adaptée à celle du noyau. Dans ce cas les deux calottes peuvent avoir des indices de réfraction différents, pourvu que ces indices soient inférieurs à celui du noyau central.

Enfin, il va de soi que le coupleur selon l'invention peut être utilisé pour transmettre la lumière issue de la source à plusieurs lignes de transmission, par exemple à un câble comprenant un faisceau de fibres optiques.

**Revendications**

1. Coupleur optique pour connecter une source lumineuse (20) avec, au moins, une ligne de transmission optique (14) de section faible par rapport à l'ouverture du faisceau lumineux issu de ladite source, du genre comprenant:

des moyens de focalisation et de collimation transparents (10) interposés entre la source lumineuse et l'extrémité de la ligne, comprenant au moins un premier élément (26) présentant un premier indice de réfraction, formant un premier volume de révolution de même axe que l'extrémité de ladite ligne, et comportant une première et une seconde surfaces convexes de révolution axialement opposées,

des moyens de support (16, 18) pour monter ladite source lumineuse (20) au voisinage d'une première face desdits moyens de focalisation et de collimation, et

des moyens pour monter l'extrémité (32) de ladite ligne optique (14) au voisinage d'une seconde face opposée à ladite premier face desdites moyens de focalisation, caractérisé en ce que: lesdits moyens de focalisation et de collimation comportent en outre:

un deuxième élément (24a) présentant un deuxième indice de réfraction inférieur à celui dudit premier élément, formant un second volume de révolution ayant une surface convexe (36) et une surface concave (38) toutes deux de révolution, la forme et la dimension de ladite surface concave étant telles que cette dernière s'emboîte exactement et coaxialement sur ladite première surface convexe dudit premier élément, et

un troisième élément (24b) présentant un troisième indice de réfraction inférieur à celui dudit premier élément, formant un troisième volume de révolution ayant une surface concave (40) et une seconde surface, toutes deux de révolution, la forme et la dimension de ladite surface concave étant telle que cette dernière s'emboîte exactement et coaxialement sur ladite second surface convexe dudit premier élément,

ladite source (12) est montée sur lesdits moyens de support au voisinage de la surface convexe (36) dudit second élément et sur ledit axe, de façon que la lumière issue de ladite source traverse successivement lesdits deuxième, premier et troisième éléments en formant à l'intérieur desdits éléments un faisceau lumineux de même axe que celui de ces derniers, et

lesdits moyens pour monter l'extrémité (32) de ladite ligne optique (14) sont disposés dans ladite second surface dudit troisième élément, de façon que l'extrémité de ladite ligne soit en contact avec cette surface et que son axe coïncide avec l'axe desdits trois éléments, et reçoive le faisceau lumineux issu dudit troisième élément.

2. Coupleur optique selon la revendication 1, caractérisé en ce que lesdits moyens de support comprennent:

un logement cylindrique (18) ouvert à une de ses extrémités et comportant un fond (16), le diamètre intérieur dudit logement étant inférieur au diamètre de la section transversale la plus grande de la surface convexe (36) dudit deuxième élément,

des moyens pour fixer ladite source lumineuse (20) à l'intérieur dudit logement, au centre du fond dudit logement, et

des moyens de fixation (22) pour fixer les bords de l'ouverture dudit logement sur la surface convexe (36) dudit deuxième élément en faisant coïncider l'axe dudit logement avec celui desdits trois éléments.

3. Coupleur optique selon la revendication 2, caractérisé en ce que lesdits moyens de fixation (22) sont constitués par de la colle.

4. Coupleur optique selon la revendication 2 ou 3, caractérisé en ce que la profondeur dudit logement cylindrique (18) est telle que, lorsque ledit logement est fixé sur ledit deuxième élément, la totalité du faisceau lumineux issu de ladite source lumineuse frappe la surface convexe (36) dudit deuxième élément.

5. Coupleur optique selon l'une quelconque des revendications précédentes, caractérisé en ce que lesdits moyens pour monter l'extrémité (32) de ladite ligne comprennent un évidement pratiqué dans ladite seconde surface dudit troisième élément, de même section que ladite ligne et dans lequel vient se loger l'extrémité de cette dernière.

6. Coupleur optique selon l'une quelconque des revendications précédentes, caractérisé en ce que lesdits deuxième et troisième éléments sont constitués par une seule et même enveloppe (24) entourant entièrement ledit premier élément (26), lesdits deuxième et troisième indices de réfraction étant alors tous deux égaux.

7. Coupleur optique selon la revendication 6, caractérisé en ce que ledit premier élément est sphérique et les surfaces intérieure et extérieures de ladite enveloppe sont également sphériques et de même centre que la sphère constituant ledit premier élément, le rayon intérieur de ladite enveloppe étant identique au rayon dudit premier élément.

8. Coupleur optique selon la revendication 1, caractérisé en ce que:

ledit premier élément est sphérique,

lesdits deuxième et troisième éléments sont constitués par une seule et même enveloppe (24) entourant entièrement ledit premier élément, dont les surfaces intérieure et extérieure sont également sphériques et de même centre que la sphère constituant ledit premier élément, le rayon de ladite surface intérieure étant égal à celui dudit premier élément, et lesdits deuxième et troisième indices de réfraction étant tous deux égaux, et

ledit coupleur comporte en outre:

un substrat (42) sur lequel est fixée ladite source lumineuse (20),

une rainure (44) pratiquée dans ledit substrat au voisinage de ladite source lumineuse, et

des moyens pour fixer ladite enveloppe (24) dans ladite rainure à une distance et selon une orientation maximisant la quantité de lumière atteignant ladite ligne de transmission optique.

9. Coupleur optique selon l'une quelconque des revendications précédentes, caractérisé en ce que ladite source lumineuse (20) est une diode électroluminescente.

10. Coupleur optique selon l'une quelconque des revendications précédentes, caractérisé en ce que ladite ligne de transmission (14) est une fibre optique.

**Claims**

1. An optical connector for connecting a light source (20) to at least one optical transmission line (14) having a small cross-section with respect to the aperture of the light beam emitted by said source, of the type including:

transparent focusing and collimation means (10) arranged between the light source and the line end, comprising at least a first element (26) having a first refractive index, forming a first volume of revolution having the same axis as the end of said line, and comprising first and second axially opposed convex surfaces of revolution,

supporting means (16, 18) for mounting said light source (20) in the vicinity of a first face of said focusing and collimation means, and

means for mounting the end (32) of said optical line (14) in the vicinity of a second face opposite said first face of said focusing and collimation means, characterized in that said focusing and collimation means further include:

a second element (24a) having a second refractive index smaller than that of the first element, forming a second volume of revolution with a convex surface (36) and a concave surface (38), both being surfaces of revolution, the shape and size of said concave surface being such that the latter fits exactly and coaxially into said first convex surface of said first element, and

a third element (24b) having a third refractive index smaller than that of said first element, forming a third volume of revolution with a concave surface (40) and a second surface, both being surfaces of revolution, the shape and size of said concave surface being such that the latter fits exactly and coaxially into said second convex surface of said first element,

said source (12) is mounted on said supporting means in the vicinity of the convex surface (36) of said second element and on said axis so that the light emitted by said source crosses successively said second, first and third elements thus forming inside said elements a light beam having the same axis as that of these latter elements, and

said means for mounting the end (32) of said optical line (14) are arranged in said second surface of said third element in such a way that the end of said line is in contact with this surface and that its axis coincides with the axis of said three elements and receives the light beam emitted by said third element.

2. An optical connector according to claim 1, characterized in that said supporting means include:

a cylindrical housing (18) which is open at one of its ends and comprises a bottom (16), the inner diameter of said housing being smaller than the diameter of the largest cross-section of the convex surface (36) of said second element,

means for securing said light source (20) inside said housing in the center of the bottom of said housing, and

securing means (22) for securing the edges of the apertures of said housing on the convex surface (36) of said second element in such a way that the axis of said housing coincides with that of the three elements.

3. An optical connector according to claim 2, characterized in that said securing means (22) consist of glue.

4. An optical connector according to claim 2 or 3, characterized in that the depth of said cylindrical housing (18) is such that when said housing is secured on said second element, the whole light beam emitted by said light source impinges on the convex surface (36) of said second element.

5. An optical connector according to any one of the foregoing claims, characterized in that said means for mounting the end (32) of said line comprise a recess in said second surface of said third element, said recess having the same cross-section as said line and accommodating the end of the latter.

6. An optical connector according to any one of the foregoing claims, characterized in that said second and third elements are made of a single shell (24) entirely surrounding said first element (26), said second and third refractive indices being then both equal.

7. An optical connector according to claim 6, characterized in that said first element is spherical and the inner and outer surfaces of said shell are also spherical, and have the same center as the sphere forming said first element, the inner radius of said shell being identical with the radius of said first element.

8. An optical connector according to claim 1, characterized in that:

said first element is spherical,

said second and third elements consist of a single shell (24) entirely surrounding said first element, whose inner and outer surfaces are also spherical and have the same center as the sphere forming said first element, the radius of said inner surface being equal to that of said first element and said second and third refractive indices being both equal, and said connector furthermore includes:

a substrate (42) upon which said light source (20) is mounted,

a groove (44) made in said substrate in the vicinity of said light source, and

means for fixing said shell (24) in said groove at a distance and with an orientation maximizing the quantity of light reaching said optical transmission line.

9. An optical connector according to any one of the foregoing claims, characterized in that said light source (20) is a light emitting diode.

10. An optical connector according to any one of the foregoing claims, characterized in that said transmission line (14) is an optical fiber.

**Patentansprüche**

1. Optischer Koppler zur Verbindung einer Lichtquelle (20) mit mindestens einer optischen Übertragungsleitung (14), deren Querschnitt klein ist gegenüber dem Öffnungswinkel des von der genannten Quelle ausgesandten Lichtbündels, der folgendes einschließt:

— durchsichtige, zwischen der Lichtquelle und dem Leitungsende angeordnete Fokussier- und Kollimationsmittel (10), die wenigstens ein erstes Element (26) mit einer ersten Brechungszahl aufweisen, ein erstes Drehvolumen mit gleicher Achse wie das Leitungsende bilden, und erste und zweite, axial entgegengesetzte konvexe Drehoberflächen einschließen,

— Stützmittel (16, 18) zum Befestigen der Lichtquelle (20) in der Nähe einer ersten Fläche der Fokussier- und Kollimationsmittel, und

— Mittel zum Befestigen des Endes (32) der optischen Leitung (14) in der Nähe einer zweiten, der ersten Fläche der Fokussiermittel entgegengesetzten Fläche, dadurch gekennzeichnet, daß die Fokussier- und Kollimationsmittel weiterhin einschließen:

— ein zweites, gegenüber dem ersten Element eine kleinere zweite Brechungszahl aufweisendes Element (24a), das ein zweites Drehvolumen mit einer konvexen Oberfläche (36) und einer konkaven Oberfläche (38) bildet, wobei beide Oberflächen Drehoberflächen sind, und die Form und Größe der konkaven Oberfläche so gestaltet ist, daß sich letztere genau und koaxial in die erste konvexe Oberfläche des ersten Elements einfügt, und

— ein drittes, gegenüber dem ersten Element eine kleinere dritte Brechungszahl aufweisendes Element (24b), das ein drittes Drehvolumen mit einer konkaven Oberfläche (40) und einer zweiten Oberfläche bildet, wobei beide Oberflächen Drehoberflächen sind, und die Form und Größe der konkaven Oberfläche so gestaltet ist, daß sich letztere genau und koaxial in die zweite konvexe Oberfläche des ersten Elementes einfügt,

— die Quelle (12) auf den Stützmitteln in der Nähe der konvexen Oberfläche (36) des zweiten Elementes und auf der Achse so angeordnet ist, daß das von der Lichtquelle ausgesandte Licht nacheinander das zweite, erste und dritte Element durchläuft und dabei im Innern der Elemente ein Lichtbündel mit einer diesen gleichen Achse bildet, und

— die Mittel zum Befestigen des Endes (32) der optischen Leitung (14) auf der zweiten Oberfläche des dritten Elementes so angeordnet sind, daß das Ende der Leitung in Berührung mit dieser Oberfläche steht und seine Achse mit der der drei Elemente zusammenfällt und das von dem dritten Element ausgesandte Lichtbündel erhält.

2. Optischer Koppler nach Anspruch 1, dadurch gekennzeichnet, daß die Stützmittel folgendes einschließen:

— ein zylindrisches Gehäuse (18), das an einem Ende offen ist und einen Boden (16) aufweist, wobei der Innendurchmesser des Gehäuses kleiner ist als der Durchmesser des größten Querschnittes der konvexen Oberfläche (36) des zweiten Elementes,

— Mittel zum Befestigen der Lichtquelle (20) im Innern des Gehäuses in der Mitte des Gehäusebodens, und

— Befestigungsmittel (22) zum Befestigen der Öffnungsränder des Gehäuses auf der konvexen Oberfläche (36) des zweiten Elementes, wobei man die Achse des Gehäuses mit der der drei Elemente zusammenfallen läßt.

3. Optischer Koppler nach Anspruch 2, dadurch gekennzeichnet, daß die Befestigungsmittel (22) aus Klebstoff bestehen.

4. Optischer Koppler nach Anspruch 2 oder 3, dadurch gekennzeichnet, daß das zylindrische Gehäuse (18) so tief ist, daß wenn das Gehäuse auf dem zweiten Element befestigt ist, das ganze von der Lichtquelle ausgesandte Lichtbündel auf die konvexe Oberfläche (36) des zweiten Elementes auftrifft.

5. Optischer Koppler nach einem der vorhergehenden Ansprüche, dadurch gekennzeichnet, daß die Mittel zum Befestigen des Endes (32) der Leitung eine auf der zweiten Oberfläche des dritten Elementes angebrachte Aussparung aufweisen, die den gleichen Querschnitt wie die Leitung hat und in die sich das Ende der letzteren einfügt.

6. Optischer Koppler nach einem der vorhergehenden Ansprüche, dadurch gekennzeichnet, daß das zweite und dritte Element aus ein und derselben Hülle (24) besteht, die vollständig das erste Element (26) umgibt, wobei die zweite und die dritte Brechungszahl dann gleich sind.

7. Optischer Koppler nach Anspruch 6, dadurch gekennzeichnet, daß das erste Element kugelförmig, und die innere und äußere Oberfläche der Hülle ebenfalls kugelförmig ist und den gleichen Mittelpunkt hat, wie die das erste Element bildende Kugel, wobei der Innenradius der Hülle mit dem Radius des ersten Elementes identisch ist.

8. Optischer Koppler nach Anspruch 1, dadurch gekennzeichnet, daß

— das erste Element kugelförmig ist,

— das zweite und dritte Element aus ein und derselben Hülle (24) bestehen, die das erste Element vollständig umgibt, deren innere und äußere Oberfläche ebenfalls kugelförmig ist und den gleichen Mittelpunkt hat, wie die das erste Element bildende Kugel, wobei der Radius der inneren Oberfläche gleich dem des ersten Elementes ist, und die zweite und dritte Brechungszahl gleich sind,

und der Koppler weiterhin einschließt:

— ein Substrat (42), auf dem die Lichtquelle (20) befestigt ist,

— eine Rille (44), die in dem Substrat in der Nähe der Lichtquelle angebracht ist, und

— Mittel zum Befestigen der Hülle (24) in der Rille, so entfernt und orientiert, daß ein Maximum an Licht die optische Übertragungsleitung erreicht.

9. Optischer Koppler nach einem der vorhergehenden Ansprüche, dadurch gekennzeichnet, daß die Lichtquelle (20) eine lichtausstrahlende Diode ist,

10. Optischer Koppler nach einem der vorhergehenden Ansprüche, dadurch gekennzeichnet, daß die Übertragungsleitung (14) eine optische Faser ist.

0013319

FIG. 1

FIG. 2

FIG 3

1